# EUROPEAN PATENT APPLICATION

(11) **EP 4 803 445 A1**
(43) Date of publication of application: **09.09.2026**
(21) Application number: 24902427.4
(22) Date of filing: 04.11.2024
(51) Int. Cl.: B65G 1/04, B65G 1/137

(54) **MATERIAL PICKING SYSTEM, WAREHOUSING SYSTEM AND MATERIAL PICKING METHOD**

(30) Priority: 14.12.2023 CN 202311727259
(71) Applicant: Hai Robotics Co., Ltd., Shenzhen, Guangdong 518000 (CN)
(72) Inventor: YE, Yihua, Shenzhen, Guangdong 518000 (CN); ZHANG, Feiyue, Shenzhen, Guangdong 518000 (CN)
(74) Representative: Gulde & Partner
(86) International application number: PCT/CN2024/129755
(87) International publication number: WO 2025/124003

(57) **Abstract**

This application relates to the field of logistics warehousing technologies, and discloses a material picking system, a warehousing system, and a material picking method. The material picking system includes a rack and a retrieving or depositing assembly. The rack has storage positions and buffer positions. The storage position is configured to hold an inventory container containing material, and the buffer position is configured for a transport robot to deposit or retrieve an order container thereon. The retrieving or depositing assembly has a first bearing platform and a second bearing platform. The retrieving or depositing assembly is capable of moving to the storage position to retrieve the inventory container to the first bearing platform, or deposit the inventory container at the storage position, and moving to the buffer position to retrieve the order container to the second bearing platform, or deposit the order container to the buffer position. A picking mechanism is disposed on the retrieving or depositing assembly, and the picking mechanism is configured to pick at least a part of the material from the inventory container on the first bearing platform into the order container on the second bearing platform according to an order corresponding to the order container. In the foregoing manner, in this application, spatial utilization of a warehouse can be optimized while material picking efficiency is improved.

## Description

### CROSS-REFERENCES

This application claims priority to Chinese Patent Application No. 202311727259.1, with the China National Intellectual Property Administration on December 14, 2023 and entitled "MATERIAL PICKING SYSTEM, WAREHOUSING SYSTEM, AND MATERIAL PICKING METHOD", which is incorporated herein by reference in its entirety.

### TECHNICAL FIELD

Embodiments of this application relate to the field of logistics warehousing technologies, and specifically, to a material picking system, a warehousing system, and a material picking method.

### BACKGROUND OF THE DISCLOSURE

With acceleration of modern life and advancement in logistics automation, there is a higher requirement on material handling efficiency in warehousing systems.

In conventional material picking, generally transport robots retrieve material boxes from racks to designated workstations, where human operators perform manual picking, after which the transport robots return the picked material boxes to the racks. In the entire processing process, the transport robots need to expend significant time on material boxes transport, resulting in substantial time and labor costs. Furthermore, dedicated workstations need to be disposed to provide operational space for material picking, which occupies warehouse space and affects spatial utilization.

### SUMMARY OF THE INVENTION

In view of the above problems, embodiments of this application provide a material picking system, a warehousing system, and a material picking method, to optimize spatial utilization of a warehouse while improving material picking efficiency.

According to an aspect of this application, a material picking system is provided and includes a rack and a retrieving or depositing assembly. The rack has storage positions and buffer positions, at least one of the storage positions is configured to hold an inventory container containing material, and at least one of the buffer positions is configured for a transport robot to deposit or retrieve an order container on the at least one of the buffer positions. The retrieving or depositing assembly is movably disposed on the rack and has a first bearing platform and a second bearing platform, the retrieving or depositing assembly is capable of moving to the storage position to retrieve the inventory container to the first bearing platform, or deposit the inventory container at the storage position, and the retrieving or depositing assembly is capable of moving to the buffer position to retrieve the order container to the second bearing platform, or deposit the order container at the buffer position; and a picking mechanism is disposed on the retrieving or depositing assembly, and the picking mechanism is configured to pick at least a part of the material in the inventory container on the first bearing platform into the order container on the second bearing platform according to an order corresponding to the order container.

In an optional manner, the retrieving or depositing assembly has a first retrieving or depositing mechanism and a second retrieving or depositing mechanism, the first retrieving or depositing mechanism is disposed on the first bearing platform and configured to retrieve or deposit the inventory container at the storage position, and the second retrieving or depositing mechanism is disposed on the second bearing platform and configured to retrieve or deposit the order container at the buffer position.

In an optional manner, the first bearing platform and the second bearing platform are adjacently disposed along a horizontal direction, and the retrieving or depositing assembly has a third retrieving or depositing mechanism; the third retrieving or depositing mechanism is disposed on the first bearing platform and configured to retrieve or deposit the inventory container at the storage position, the third retrieving or depositing mechanism is further configured to retrieve the order container from the buffer position to the first bearing platform, and deposit the order container from the first bearing platform to the second bearing platform; and the third retrieving or depositing mechanism is further configured to retrieve the order container from the second bearing platform to the first bearing platform, and deposit the order container on the first bearing platform to the buffer position.

In an optional manner, the third retrieving or depositing mechanism is configured to: after depositing the order container on the first bearing platform to the second bearing platform, sequentially retrieve inventory containers from the plurality of storage positions according to the order corresponding to the order container, and deposit the retrieved inventory containers to the first bearing platform for the picking mechanism to perform material picking and then return, to complete the order corresponding to the order container.

In an optional manner, the first bearing platform and the third retrieving or depositing mechanism are disposed to be synchronously rotatable about a vertical axis, where the third retrieving or depositing mechanism is configured to synchronously rotate with the first bearing platform to a position facing the second bearing platform to retrieve or deposit the order container on the second bearing platform.

In an optional manner, the first bearing platform and the second bearing platform are adjacently disposed along a horizontal direction, and the retrieving or depositing assembly has a fourth retrieving or depositing mechanism. The fourth retrieving or depositing mechanism is disposed on the second bearing platform and configured to retrieve or deposit the order container at the buffer position. The third retrieving or depositing mechanism is further configured to retrieve the inventory container from the storage position to the second bearing platform, and deposit the inventory container on the second bearing platform to the first bearing platform; and the fourth retrieving or depositing mechanism is further configured to retrieve the inventory container from the first bearing platform to the second bearing platform, and deposit the inventory container on the second bearing platform to the storage position.

In an optional manner, the first bearing platform and the second bearing platform are configured to perform synchronized vertical lifting, and/or synchronized horizontal movement.

In an optional manner, a transverse track and a longitudinal track are disposed on the rack, where the transverse track is fixed to the rack, the longitudinal track is movably connected to the transverse track along the horizontal direction, and the retrieving or depositing assembly is movably connected to the longitudinal track along a vertical direction; or the longitudinal track is fixed to the rack, the transverse track is movably connected to the longitudinal track along a vertical direction, and the retrieving or depositing assembly is movably connected to the transverse track along the horizontal direction; or the transverse track is movably connected to the rack along a vertical direction, the longitudinal track is movably connected to the rack along the horizontal direction, and the retrieving or depositing assembly is movably connected to the transverse track along the horizontal direction, and movably connected to the longitudinal track along the vertical direction.

In an optional manner, multi-layer slots are arranged vertically on the rack, where a bottom-layer slot is the buffer position, and at least one remaining layer of slot is the storage position.

In an optional manner, the rack is configured to be placed on a bearing plane, a bearing carrier is disposed at a bottom end of the rack that is close to the bearing plane, the buffer position is formed on the bearing carrier, and a channel for the transport robot to walk is formed between the bearing carrier and the bearing plane; the bearing carrier is provided with a goods channel penetrating therethrough along the vertical direction, and the goods channel is provided with an opening along the horizontal direction on a side that faces toward and/or away from the retrieving or depositing assembly; the opening is configured for a jacking mechanism of the transport robot carrying the order container to enter the goods channel along the horizontal direction, enabling the jacking mechanism of the transport robot to deposit the order container on the bearing carrier after descent; and the goods channel is configured for the jacking mechanism of the transport robot without load to traverse therethrough along the vertical direction, enabling the jacking mechanism of the transport robot to carry the order container, where the opening is configured for the jacking mechanism of the transport robot carrying the order container to exit through the goods channel along the horizontal direction.

In an optional manner, the bearing carrier includes a beam and at least one set of cantilever arms, where the beam is horizontally disposed at a bottom side of the rack, each set of cantilever arms include at least a first cantilever arm and a second cantilever arm, one end of the first cantilever arm and one end of the second cantilever arm are both fixed to the beam, the first cantilever arm and the second cantilever arm are both perpendicular to the beam, the buffer position is formed by the first cantilever arm and the second cantilever arm jointly, and the first cantilever arm and the second cantilever arm are spaced apart along an extension direction of the beam, to enable the goods channel to be formed between the first cantilever arm and the second cantilever arm.

According to another aspect of this application, a warehousing system is provided and includes a transport robot and the material picking system according to any one of the foregoing manners. The transport robot is configured to deposit or transport the order container at the buffer position of the rack.

According to another aspect of this application, a material picking method is provided and applied to the foregoing warehousing system. The material picking method includes:
controlling the transport robot to deposit the order container at the buffer position of the rack;
controlling the retrieving or depositing assembly to move to the buffer position of the rack and retrieve the order container to the second bearing platform; controlling the retrieving or depositing assembly to move to the storage position of the rack and retrieve the inventory container to the first bearing platform; controlling the picking mechanism to pick at least a part of the material from the inventory container on the first bearing platform into the order container on the second bearing platform; after picking completion, controlling the retrieving or depositing assembly to deposit the order container on the second bearing platform to the buffer position of the rack; and controlling the transport robot to transport the order container from the buffer position of the rack to a target position.

In an optional manner, the controlling the retrieving or depositing assembly to move to the storage position of the rack and retrieve the inventory container to the first bearing platform and the controlling the picking mechanism to pick at least a part of the material from the inventory container on the first bearing platform into the order container on the second bearing platform include: controlling the retrieving or depositing assembly to move to the storage position containing a target inventory container, where the target inventory container stores items needed by the order corresponding to the order container; controlling the retrieving or depositing assembly to retrieve the target inventory container to the first bearing platform; controlling the picking mechanism to pick to-be-picked material from the target inventory container on the first bearing platform into the order container on the second bearing platform; controlling the retrieving or depositing assembly to return the target inventory container on the first bearing platform to the storage position; and determining another new inventory container as the target inventory container, and jumping to the step of controlling the retrieving or depositing assembly to move to the storage position containing a target inventory container, until all needed material has been picked into the order container on the second bearing platform, or the rack accessible by the retrieving or depositing assembly no longer contains the target inventory container.

The material picking system provided in embodiments of this application is centered on the rack. The buffer position on the rack is responsible for docking with a transport robot to implement input and output of an order container. In addition, a mobile retrieving or depositing assembly capable of accessing various rack positions for container retrieval and deposit is integrated on the rack that originally can be used only for storing and holding containers, and the first bearing platform and the second bearing platform of the retrieving or depositing assembly are used to hold inventory containers and order containers corresponding to current picking operations, so that the picking mechanism on the retrieving or depositing assembly can perform picking work more conveniently and quickly. An entire picking process has no human participation, achieving fully automated picking operations. In addition, the entire system does not need to arrange a plurality of types of robots for coordination, and only needs some simple mechanical structures for retrieval and deposit of containers and material within the containers, which substantially reduces operational costs. Furthermore, as the entire system is fully integrated into the rack, and no additional workstations for picking operations need to be disposed within limited warehouse space, utilization of the warehouse space can be improved.

The foregoing descriptions are merely brief descriptions of technical solutions of this application. To understand the technical means of this application more clearly, implementation may be performed according to content of the specification. In addition, to make the foregoing and other objectives, features, and advantages of this application more obvious and understandable, specific implementations of this application are specifically listed below.

### BRIEF DESCRIPTION OF THE DISCLOSURE

Various other advantages and benefits become clear to a person of ordinary skill in the art by reading the following detailed descriptions of preferred implementations. The accompanying drawings are merely used for illustrating the preferred implementations and are not intended to constitute a limitation on this application. Throughout the accompanying drawings, a same reference numeral represents a same component. In the accompanying drawings:
FIG. 1 is a schematic structural diagram of a warehousing system according to an embodiment of the present invention from one perspective;
FIG. 2 is a schematic structural diagram of a warehousing system according to an embodiment of the present invention from another perspective;
FIG. 3 is a schematic structural diagram of a warehousing system according to another embodiment of the present invention from one perspective;
FIG. 4 is a schematic structural diagram of a warehousing system according to another embodiment of the present invention from another perspective;
FIG. 5 is a schematic structural diagram of movable connection between a retrieving or depositing assembly and a rack in a material picking system according to an embodiment of the present invention;
FIG. 6 is an enlarged schematic structural diagram at A in FIG. 3;
FIG. 7 is a schematic flowchart of a material picking method according to an embodiment of the present invention; and
FIG. 8 is a sub-step schematic flowchart of step 630 and step 640 in FIG. 7.

Reference numerals in specific implementations are as follows:
100. material picking system; 110. rack; 111. storage position; 112. buffer position; 113. transverse track; 114. longitudinal track; 115. bearing carrier; 1151. goods channel; 11511. opening; 1152. beam; 1153. cantilever arm; 11531. first cantilever arm; 11532. second cantilever arm; 120. retrieving or depositing assembly; 121. first bearing platform; 122. second bearing platform; 123. first retrieving or depositing mechanism; 124. second retrieving or depositing mechanism; 125. third retrieving or depositing mechanism; 130. picking mechanism; 140. channel;
210. inventory container; 220. order container;
300. transport robot; 310. jacking mechanism;
400. bearing plane;
500. channel; and
1000. warehousing system.

### DETAILED DESCRIPTION

The following describes embodiments of technical solutions of this application with reference to the accompanying drawings. The following embodiments are merely used to describe the technical solutions of this application more clearly, and therefore are merely used as examples, but are not intended to limit the protection scope of this application.

Unless otherwise defined, meanings of all technical and scientific terms used in this specification are the same as those usually understood by a person skilled in the art to which this application belongs. The terms used herein are merely intended to describe objectives of the specific embodiments, but are not intended to limit this application. The terms "include", "comprise", "have", and any variant thereof in the specification and claims of this application and the accompanying drawings are intended to cover a non-exclusive inclusion.

In descriptions of embodiments of this application, the technical terms such as "first" and "second" are only used to distinguish different objects, and are not to be construed as indicating or implying relative importance or implicitly indicating the numbers, specific orders, or primary and secondary relationships of the indicated technical features. In the descriptions of embodiments of this application, "a plurality of" means two or more, unless otherwise definitely and specifically limited.

References to "embodiments" in this specification mean that particular features, structures, or characteristics described with reference to embodiments may be included in at least one embodiment of this application. The occurrence of the phrase at various positions in the specification does not necessarily refer to a same embodiment, nor is an independent or alternative embodiment mutually exclusive to other embodiments. A person skilled in the art explicitly and implicitly understands that embodiments described in this specification may be combined with other embodiments.

In the descriptions of embodiments of this application, the term "and/or" is only an association relationship that describes associated objects, and indicates that three relationships may exist. For example, A and/or B may indicate: A exists, both A and B exist, and B exists. In addition, the character "/" in this specification generally indicates an "or" relationship between the associated objects.

In the descriptions of embodiments of this application, the term "plurality of" refers to two or more (including two). Similarly, "plurality of sets" refers to two or more (including two) sets, and "plurality of pieces" refers to two or more (including two) pieces.

In the descriptions of embodiments of this application, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of illustration and description, rather than indicating or implying that the mentioned apparatus or component need to have a particular orientation or be constructed and operated in a particular orientation. Therefore, such terms should not be construed as limiting of embodiments of this application.

In the descriptions of embodiments of this application, unless otherwise explicitly specified or defined, the terms such as "mount", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two components, or an interaction relationship between two components. A person of ordinary skill in the art may understand the specific meanings of the foregoing terms in embodiments of this application according to specific situations.

As logistics automation and intelligent manufacturing undergo continuous upgrades and innovations, coupled with the persist rise in labor costs, fully automated picking systems are become a mainstream development trend to achieve higher productivity.

In an entire picking operation procedure of an existing warehousing system, not only coordinated operation of a plurality of types of robots is needed, but also manual participation is needed for picking operations. This causes the entire process to be time-consuming and labor-intensive with high costs and low efficiency. Furthermore, since picking workstations occupy some space within a warehouse, the some space cannot be utilized for container storage, thus reducing spatial utilization and a storage capacity of the warehouse.

In view of this, this application provides a material picking system. The entire system is centered on the rack, that is, the rack is designed as a fully automated system that can implement material storage and picking. Specifically, the rack integrates storage positions, a retrieving or depositing assembly, and a picking mechanism. The storage positions are configured to store containers, the retrieving or depositing assembly is configured to transport the containers between the storage positions and the picking mechanism, and the picking mechanism is responsible for performing automated picking operations on designated containers. The entire system does not need a plurality of types of robots for coordination, and does not need manual participation, thereby effectively reducing operational costs. Furthermore, additional warehouse space occupation is not needed for disposing picking stations beyond the racks, and the spatial utilization of the warehouse is improved.

The material picking system provided in embodiments of this application is applied to, including but not limited to, warehousing systems in fields such as e-commerce, manufacturing, retail, medicine, and food.

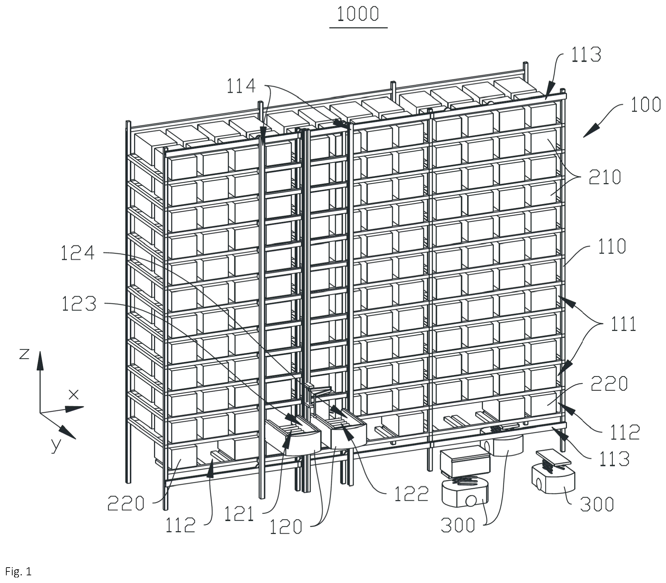

FIG. 1 is a schematic structural diagram of a material picking system according to an embodiment of this application. As shown in the figure, the material picking system 100 includes a rack 110 and a retrieving or depositing assembly 120. The rack 110 has storage positions 111 and buffer positions 112. At least one of the storage positions 111 is configured to hold an inventory container 210 storing material, and at least one of the buffer positions 112 is configured for a transport robot 300 to deposit or retrieve an order container 220 thereon. The retrieving or depositing assembly 120 is movably disposed on the rack 110 and has a first bearing platform 121 and a second bearing platform 122, and the retrieving or depositing assembly 120 is capable of moving to the storage position 111 to retrieve the inventory container 210 from the storage position 111 to the first bearing platform 121, or deposit the inventory container 210 at the storage position 111, and the retrieving or depositing assembly 120 is capable of moving to the buffer position 112 to retrieve the order container 220 from the buffer position 112 to the second bearing platform 122, or deposit the order container 220 at the buffer position 112. A picking mechanism 130 is disposed on the retrieving or depositing assembly 120, and the picking mechanism 130 is configured to pick at least a part of the material from the inventory container 210 on the first bearing platform 121 into the order container 220 on the second bearing platform 122 according to an order corresponding to the order container 220.

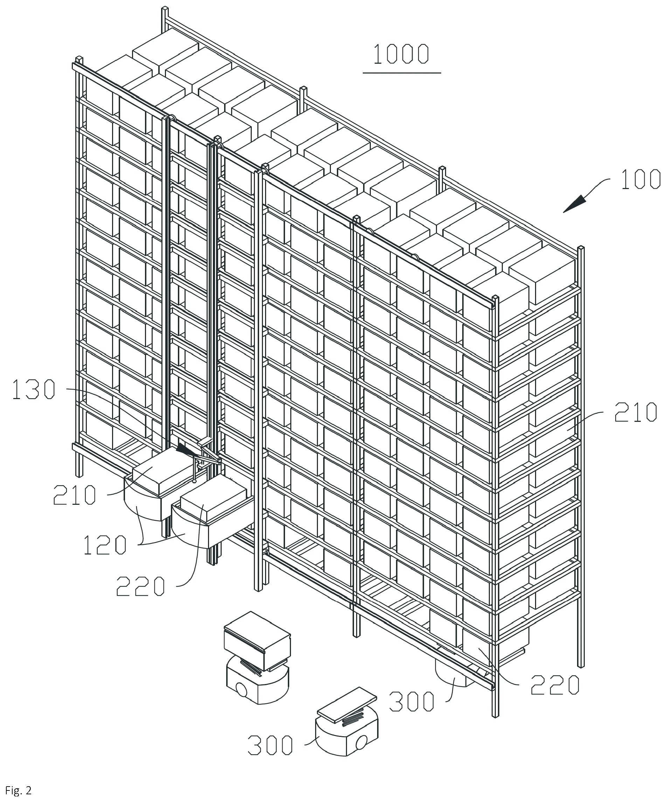

As shown in FIG. 1 and FIG. 2, a plurality of layers may be disposed in the rack 110 vertically along a direction (that is, a height direction) shown by a z axis the figure. Each layer has a plurality of slots along an x axis, each slot is configured to accommodate one container. Among these slots, some constitute storage positions 111, and the others constitute buffer positions 112. In the specific embodiments shown in FIG. 1 and FIG. 2, since a jacking robot is used as the transport robot 300, a lowest-layer of slots are disposed as buffer positions 112, for the transport robot 300 to deposit or retrieve containers at the buffer positions 112 through a jacking mechanism. At least one layer of remaining slots are storage positions 111. However, in some other embodiments, when a robot having a lifting mechanism for retrieving or depositing operations is used as the transport robot 300, that is, the transport robot can pick and place goods at arbitrary height levels of the rack 110, specific positions of the buffer positions 112 and the storage positions 111 are not restricted, and may be set based on requirements.

The retrieving or depositing assembly 120 may be connected to one side of the rack 110 or mounted on a floor surface on a retrieving or depositing side of the rack 110 through a sliding mechanism operable along both the x axis and the z axis directions. This enables the retrieving or depositing assembly 120 to move to a position corresponding to any region on the rack 110 under actuation of the sliding mechanism. As illustrated in FIG. 1 and FIG. 2, the retrieving or depositing assembly 120 may implement retrieval or deposit of containers (for example, material boxes) at the storage positions 111 and the buffer positions 112 through a retrieving or depositing mechanism. A specific retrieving or depositing mechanism may be implemented by using robotic arms, hooks, suction cups, and other mechanisms. This is not limited herein.

In the specific embodiments shown in FIG. 1 and FIG. 2, the first bearing platform 121, the second bearing platform 122, and the retrieving or depositing assembly 120 are rigidly interconnected and synchronously movable relative to the rack 110 through a shared drive system, to control costs. In some other embodiments, the first bearing platform 121, the second bearing platform 122, and the retrieving or depositing assembly 120 are each independently movable relative to the rack 110 through a drive system, enabling more flexible control over various parts in an operational process. Alternatively, two of the three components may share a common drive system for synchronized movement, while the other one may move independently. The picking mechanism 130 is a manipulator, a suction mechanism, or the like that can pick and place material.

For ease of understanding, the following exemplarily describes a work procedure of the material picking system 100 according to the embodiments shown in FIG. 1 and FIG. 2.

First, the storage position 111 holds the inventory containers 210, and the inventory containers 210 stores material. The transport robot 300 transports an order container 220 to and deposits the order container 220 on the buffer position 112. It should be noted that, the order container 220 may include an empty order container, and/or a pre-picked order container. The pre-picked order container means that after a part of material is already picked at another workstation, another part of material further needs to continue to be picked in the material picking system 100 provided in this embodiment. This is because in a warehousing system, material types corresponding to workstations/picking systems may be different, and a same order container 220 may need picking of different types of material. Therefore, the pre-picked order container after picking completion at a preceding workstation/picking system is routed to the material picking system 100 in this embodiment for continued picking processing. Similarly, order containers 220 after picking completion in the material picking system 100 in this embodiment include all order containers whose material picking is completed and may be ready for immediate downstream packaging, and/or pre-picked order containers that have completed material picking in the material picking system 100 in this embodiment but still need continued material picking at a next workstation/picking system.

Subsequently, the retrieving or depositing assembly 120 entirely moves to a corresponding buffer position 112, retrieves the order container 220 from the buffer position 112 and deposits the order container 220 to the second bearing platform 122, and then moves to a corresponding storage position 111, retrieves the corresponding inventory container 210 from the storage positions 111 and deposits the inventory container 210 to the first bearing platform 121. Alternatively, the retrieving or depositing assembly 120 entirely moves to a corresponding storage position 111, retrieves the inventory container 210 from the storage position 111 and deposits the inventory container 210 to the first bearing platform 121, and then moves to a corresponding buffer position 112, and retrieves the corresponding order container 220 from the buffer position 112 and deposits the order container 220 to the second bearing platform 122.

Then, the picking mechanism 130 picks the needed material from the inventory container 210 on the first bearing platform 121 into the order container 220 on the second bearing platform 122.

Next, if the order container 220 on the second bearing platform 122 further needs material from another inventory container 210, the retrieving or depositing assembly 120 returns the inventory container 210 on the current first bearing platform 121 to the storage position 111 (which may be the storage position 111 in which the inventory container 210 is originally located, or any vacant storage position 111); and then moves to another storage position 111, and retrieves the corresponding inventory container 210 to the first bearing platform 121 for picking. This process continues until all material needed by the order container 220 in the material picking system 100 in this embodiment have been picked, or no material needed by the order container 220 remain available on the rack 110 accessible by the retrieving or depositing assembly 120. The racks 110 accessible by the retrieving or depositing assembly 120 may include only a rack 110 in which it is located, or parallel disposed racks 110 facing the retrieving or depositing assembly 120, depending on warehouse arrangement and its own structure. During this process, if all material within an inventory container or a part of inventory containers 210 are completely picked into the order container 220, rendering them empty, the retrieving or depositing assembly 120 may not need to return them to the storage position 111 and may directly deposit them to the buffer position 112.

Finally, the retrieving or depositing assembly 120 deposits the order container 220 with completed picking to the buffer position 112, and the transport robot 300 then transports the order container 220 with completed picking to a designated position, thereby concluding picking work for this specific order container 220 in the material picking system 100 in this embodiment.

The material picking system 100 provided in embodiments of this application is movable centered on the rack. The buffer position 112 on the rack 110 is responsible for docking with the transport robot 300 to implement input and output of an order container 220. In addition, a mobile retrieving or depositing assembly 120 capable of accessing various rack positions for container retrieval or deposit is integrated on the rack that originally can be used only for storing and holding containers, and the first bearing platform 121 and the second bearing platform 122 of the retrieving or depositing assembly 120 are used to hold inventory containers 210 and order containers 220 corresponding to current picking operations, so that the picking mechanism 130 on the retrieving or depositing assembly 120 can perform picking work more conveniently and quickly. An entire picking process has no human participation, achieving fully automated picking operations. In addition, the entire system does not need to arrange a plurality of types of robots for coordination, and only needs some simple mechanical structures for retrieval or deposit of containers and material within the containers, which substantially reduces operational costs. Furthermore, as the entire system is fully integrated into the rack, and no additional workstations for picking operations need to be disposed within limited warehouse space, utilization of the warehouse space can be improved.

To facilitate retrieval or deposit of the containers on the first bearing platform 121 and the second bearing platform 122, this application further provides an implementation. Specifically, refer to FIG. 1 and FIG. 2. As shown in the figures, the retrieving or depositing assembly 120 has a first retrieving or depositing mechanism 123 and a second retrieving or depositing mechanism 124. The first retrieving or depositing mechanism 123 is disposed on the first bearing platform 121 and configured to retrieve or deposit the inventory container 210 at the storage position 111. The second retrieving or depositing mechanism 124 is disposed on the second bearing platform 122 and configured to retrieve or deposit the order container 220 at the buffer position 112.

By disposing the first retrieving or depositing mechanism 123 on the first bearing platform 121 and disposing the second retrieving or depositing mechanism 124 on the second bearing platform 122, it is possible to conveniently and efficiently implement transport of the inventory container 210 between the storage position 111 and the first bearing platform 121 and transport of the order container 220 between the buffer position 112 and the second bearing platform 122, thereby improving efficiency of automated picking.

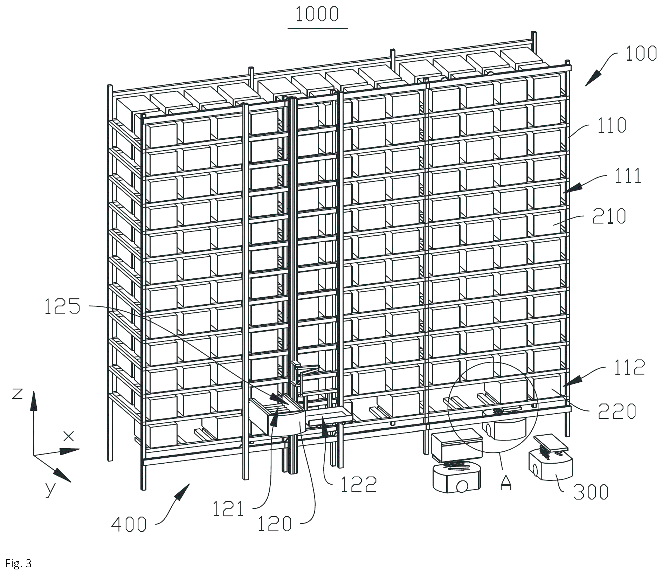

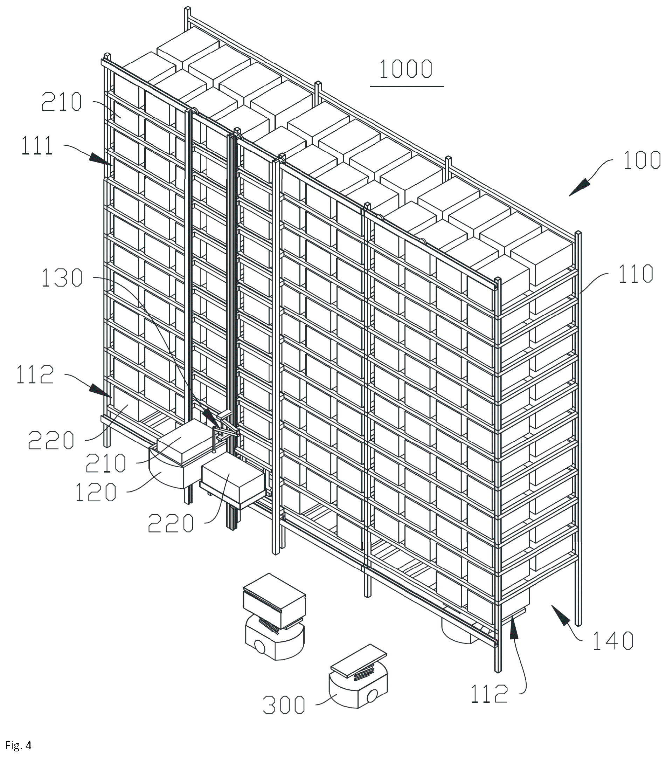

For container retrieval and deposit, this application further provides an implementation. Specifically, refer to FIG. 3 and FIG. 4, which are schematic structural diagrams of a material picking system according to another embodiment of this application from two perspectives. As shown in the figure, the first bearing platform 121 and the second bearing platform 122 are adjacently disposed along a horizontal direction (a direction shown by an x axis in the figure), and the retrieving or depositing assembly 120 has a third retrieving or depositing mechanism 125. The third retrieving or depositing mechanism 125 is disposed on the first bearing platform 121 and configured to retrieve and deposit the inventory container 210 at the storage position 111, and the third retrieving or depositing mechanism 125 is further configured to retrieve the order container 220 from the buffer position 112 to the first bearing platform 121, and deposit the order container 220 from the first bearing platform 121 to the second bearing platform 122. The third retrieving or depositing mechanism 125 is further configured to retrieve the order container 220 from the second bearing platform 122 to the first bearing platform 121, and deposit the order container 220 from the first bearing platform 121 to the buffer position 112.

Specifically, the third retrieving or depositing mechanism 125 may be a fork, a manipulator, or the like. This is not limited herein.

By horizontally adjacently disposing the first bearing platform 121 and the second bearing platform 122, and disposing the third retrieving or depositing mechanism 125 on the first bearing platform 121, automated transport of the inventory container 210 and the order container 220 between the rack 110 and the first bearing platform 121, and automated transport of the order container 220 between the first bearing platform 121 and the second bearing platform 122 are implemented.

Further, in some embodiments, the third retrieving or depositing mechanism 125 is configured to: after depositing the order container 220 from the first bearing platform 121 to the second bearing platform 122, sequentially retrieve inventory containers 210 from the plurality of storage positions 111 according to the order corresponding to the order container 220, and deposit the retrieved inventory containers to the first bearing platform 121 for the picking mechanism 130 to perform material picking and then return, to complete the order corresponding to the order container 220.

When the same order container 220 needs picking of the needed material from a plurality of inventory containers 210, by disposing the third retrieving or depositing mechanism 125 on the first bearing platform 121, after the order container 220 is deposited on the second bearing platform 122, further transport is not needed, and it is only necessary for the third retrieving or depositing mechanism 125 to sequentially retrieve the inventory containers 210 from the storage positions 111 to the first bearing platform 121 for picking, thereby helping ensure efficiency of the material picking.

For a specific work mode of the third retrieving or depositing mechanism, this application provides an implementation. Specifically, refer to FIG. 3 and FIG. 4. As shown in the figures, the first bearing platform 121 and the third retrieving or depositing mechanism 125 are disposed to be synchronously rotatable about a vertical axis (an axis parallel to a z axis in the figures). The third retrieving or depositing mechanism 125 may synchronously rotate with the first bearing platform 121 to a position facing the second bearing platform 122 to retrieve and deposit the order container 220 on the second bearing platform 122.

By disposing the first bearing platform 121 and the third retrieving or depositing mechanism 125 to be synchronously rotatable about the vertical axis, when the third retrieving or depositing mechanism 125 and the first bearing platform 121 synchronously rotate to be oriented toward the second bearing platform 122, transport of the order container 220 between the first bearing platform 121 and the second bearing platform 122 can be implemented. On this basis, various work conditions needed for picking can be satisfied, and compared with a manner in which dual retrieving or depositing mechanisms perform container retrieval and deposit respectively on the first bearing platform 121 and the second bearing platform 122, needed costs can be effectively reduced.

It may be understood that, in another embodiment, on the basis that the first bearing platform and the second bearing platforms are adjacently disposed along a horizontal direction and the retrieving or depositing assembly has the third retrieving or depositing mechanism, a fourth retrieving or depositing mechanism may also be disposed on the second bearing platform. The fourth retrieving or depositing mechanism is configured to retrieve and deposit the order container at the buffer position, and may be further configured to retrieve the inventory container from the storage position to the second bearing platform, and deposit the inventory container from the second bearing platform to the first bearing platform. Similarly, the fourth retrieving or depositing mechanism may alternatively retrieve the inventory container from the first bearing platform to the second bearing platform, and then deposit the inventory container from the second bearing platform to the storage position.

To reduce costs of the material picking system 100 and optimize control logic of each mechanism, this application provides an implementation. Specifically, the first bearing platform 121 and the second bearing platform 122 are disposed to perform synchronized vertical lifting, and/or synchronized horizontal movement.

In the specific embodiments shown in FIG. 1 to FIG. 4, the first bearing platform 121 and the second bearing platform 122 are fixed to a same base, and the base is movably disposed on a side of the rack 110 through a slide track, so that through a drive mechanism driving movement of the base, the first bearing platform 121 and the second bearing platform 122 are synchronously vertically lifted and lowered and horizontally move. By disposing the first bearing platform 121 and the second bearing platform 122 to perform synchronized vertical lifting and horizontal movement, only one set of drive system is needed for driving, and simplified control logic with a low error probability can be ensured, thereby helping ensure reliability of a material picking operation.

It may be understood that, for the first bearing platform 121 and the second bearing platform 122 to perform only synchronized vertical lifting or synchronized horizontal movement, it is necessary to dispose the first bearing platform 121 and the second bearing platform 122 as separate structures, each being equipped with a corresponding slide block for vertical lifting or horizontal movement. Additionally, both the bearing platforms are driven in a same direction of movement by using a single drive mechanism.

For movement of the retrieving or depositing assembly 120, this application provides an implementation. Specifically, refer to FIG. 1. As show in the figure, transverse tracks 113 and longitudinal tracks 114 are disposed on the rack 110, where the transverse tracks 113 are fixed to the rack 110, the longitudinal tracks 114 are movably connected to the transverse tracks 113 along the horizontal direction (a direction shown by the x axis in the figure), and the retrieving or depositing assembly 120 is movably connected to the longitudinal tracks 114 along a vertical direction (a direction shown by the z axis in the figure).

Movement of the retrieving or depositing assembly 120 along the vertical direction relative to the longitudinal track 114, in coordination with movement of the longitudinal track 114 along the horizontal direction relative to the transverse track 113 can enable the retrieving or depositing assembly 120 to move to a position corresponding to any storage position 111 or buffer position 112 on the rack 110, so that the retrieving or depositing assembly 120 performs container retrieval and deposit at the corresponding storage position 111 or buffer position 112.

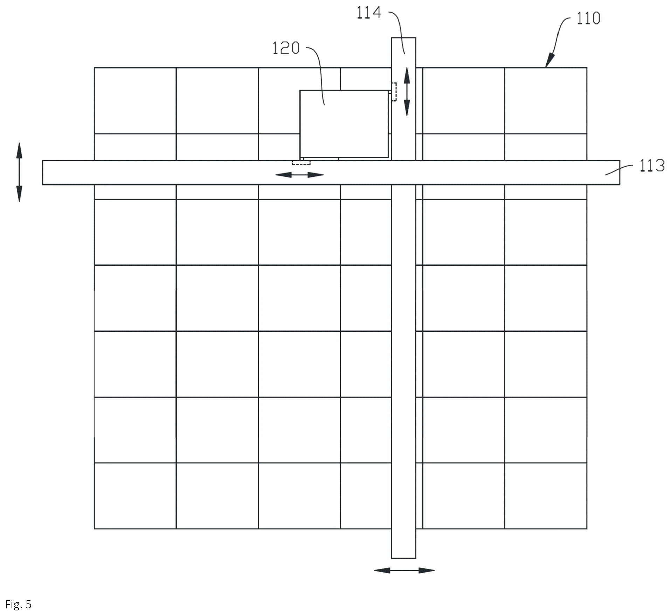

In some other embodiments, for movement of the retrieving or depositing assembly, the longitudinal tracks may alternatively be fixed to the rack, with the transverse tracks movably connected to the longitudinal tracks along the vertical direction, and the retrieving or depositing assembly movably connected to the transverse tracks along the horizontal direction. In addition, as shown in FIG. 5, the transverse tracks 113 may alternatively be movably connected to the rack 110 along the vertical direction, with the longitudinal tracks 114 movably connected to the rack 110 along the horizontal direction, and the retrieving or depositing assembly 120 movably connected to the transverse tracks along the horizontal direction 113 and movably connected to the longitudinal tracks 114 along the vertical direction. The foregoing two manners may also implement that the retrieving or depositing assembly moves to any position of the rack to perform container retrieval and deposit.

As shown in FIG. 3, in some embodiments, multi-layer slots are arranged along the vertical direction (a direction shown by the z axis in the figure) on the rack 110, where a bottom-layer slot is the buffer position 112, and at least one remaining layer of slot is the storage position 111.

Optionally, refer to FIG. 4 again. The rack 110 of the material picking system 100 is a double-deep rack. In this double-deep rack, a buffer position 112 in one deep position is formed only on a side that is of a bottom-layer slot and that is closest to the retrieving or depositing assembly, while the other deep position remains vacant, thereby creating a channel 140 for the transport robot 300. The transport robot 300 may travel through the channel 140 while carrying containers.

The multi-layer storage slots are disposed on the rack 110, to maximize warehouse space utilization, ensuring that more containers can be deposited on one rack 110. Furthermore, by disposing the bottom-layer slot as the buffer position 112, the transport robot 300 can deposit and retrieve the order container 220 more efficiently.

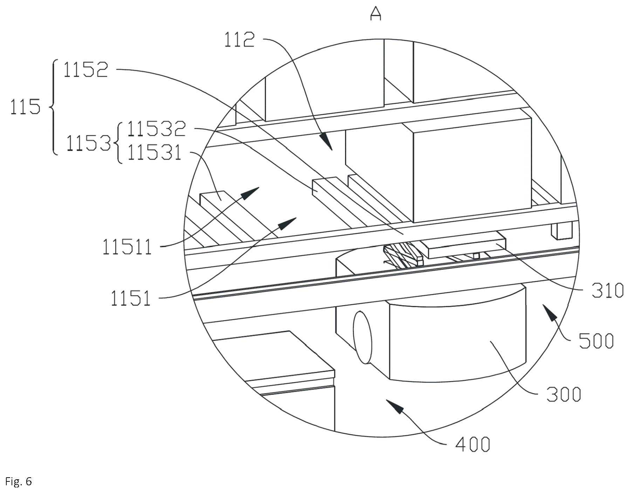

Furthermore, for design of a bearing structure on the buffer position 112, this application provides an implementation. Specifically, refer to FIG. 3, and further refer to FIG. 6. FIG. 6 shows an enlarged structure at A in FIG. 3. As shown in the figure, the rack 110 is configured to be placed on a bearing plane 400 (which may be, for example, a floor surface or a bearing platform disposed in a warehouse), a bearing carrier 115 is disposed at a bottom end of the rack 110 that is close to the bearing plane 400, the buffer position 112 is formed on the bearing carrier 115, and a channel 500 for transport robot 300 to walk is formed between the bearing carrier 115 and the bearing plane 400. The bearing carrier 115 is provided with a goods channel 1151 penetrating therethrough along the vertical direction, and the goods channel 1151 is provided with an opening 11511 along the horizontal direction (a direction shown by the y axis in the figure) on a side that faces toward and/or away from the retrieving or depositing assembly 120. The opening 11511 is configured for a jacking mechanism 310 of the transport robot 300 carrying the order container 220 to enter the goods channel 1151 along the horizontal direction, enabling the jacking mechanism 310 of the transport robot 300 to deposit the order container 220 on the bearing carrier 115 after descent. The goods channel 1151 is configured for the jacking mechanism 310 of the transport robot 300 without load to traverse therethrough along the vertical direction, enabling the jacking mechanism 310 of the transport robot 300 to carry the order container 220. The opening 11511 is configured for the jacking mechanism 310 of the transport robot 300 carrying the order container 220 to exit through the goods channel 1151 along the horizontal direction.

Specifically, the jacking mechanism 310 of the transport robot 300 may be a scissor lift mechanism, a hydraulic jacking pole, or the like. This is not limited herein. In addition, a goods platform may be disposed at the top of the jacking mechanism 310, to ensure stability during container transport. A horizontal panel may be used as the bearing carrier 115, and a notch is machined thereon to form the goods channel 1151 having an opening 11511.

A procedure of depositing the order container 220 at the buffer position 112 is as follows: The jacking mechanism 310 of the transport robot 300 carrying the order container 220 is in a raised position, the transport robot 300 enters the goods channel 1151 from a side of the goods channel 1151 and on which the opening 11511 is located. In this case, the top of the jacking mechanism 310 is higher than the top of the bearing carrier 115, that is, the bottom of the order container 220 is higher than the top of the bearing carrier 115. The jacking mechanism 310 then descends, depositing the order container 220 on the bearing carrier 115, and the transport robot 300 exits to prepare for a next operation.

A procedure of transporting the order container 220 from the buffer position 112 is as follows: The jacking mechanism 310 of the transport robot 300 without load is in a lowed position, the transport robot 300 may enter the channel 500 between the bearing carrier 115 and the bearing plane 400 from any position, enabling the jacking mechanism 310 of the transport robot 300 to correspond to the goods channel 1151 on the buffer position 112 along the height direction in terms of positions. The jacking mechanism 310 then ascends, passes through the goods channel 1151, and jacks up the order container 220 on the bearing carrier 115. Then, the transport robot 300 exits through the opening 11511 and carries the order container 220 thereon to a designated position.

For a specific structure and installation manner of the bearing carrier 115, this application further provides an implementation. Specifically, refer to FIG. 6. As show in the figure, the bearing carrier 115 includes a beam 1152 and at least one set of cantilever arms 1153. The beam 1152 is horizontally disposed at a bottom side of the rack 110, each set of cantilever arm 1153 include at least a first cantilever arm 11531 and a second cantilever arm 11532, one end of the first cantilever arm 11531 and one end of the second cantilever arm 11532 are both fixed to the beam 1152, the first cantilever arm 11531 and the second cantilever arm 11532 are both perpendicular to the beam 1152. The buffer position 112 is formed on the first cantilever arm 11531 and the second cantilever arm 11532 jointly. The first cantilever arm 11531 and the second cantilever arm 11532 are spaced apart along an extension direction of the beam 1152, to enable the goods channel 1151 to be formed between the first cantilever arm 11531 and the second cantilever arm 11532.

A manner of combining the beam 1152 and the cantilever arm 1153 is used for the bearing carrier 115, and this can save material, reduce costs, and facilitates installation. According to another aspect of embodiments of this application, a warehousing system is further provided. Specifically, refer to FIG. 1 again. The figure shows a structure of the warehousing system. The warehousing system 1000 includes a transport robot 300 and the material picking system 100 according to any one of the foregoing embodiments. The transport robot 300 is configured to deposit and transport the order container 220 at the buffer position 112 of the rack 110.

Specifically, the warehousing system 1000 may include a plurality of material picking systems 100, each material picking system 100 is responsible for work of picking different material, and the transport robot 300 may be responsible for transporting a same order container 220 between different material picking systems 100. Using an example in which the warehousing system 1000 includes two material picking systems 100, a specific operation procedure is provided below for description.

Initially, the transport robot 300 retrieves an empty order container 220 to the buffer position 112, and deposits the empty order container 220 at the buffer position 112 of one of the material picking systems 1000. After completion of all required material picking operations into said empty order container 220 by the material picking system 1000, said empty order container 220 transitions to the order container 220 with completed picking relative to the material picking system. The system then repositions said order container 220 onto its buffer position 112. Subsequently, the transport robot 300 retrieves said order container 220 from the buffer position 112, and retrieves it to the buffer position 112 of a second material picking system 1000. Following completion of all required material picking operations into said order container 220 by the second material picking system 1000, said order container 220 achieves a final order container 220. The second material picking system 1000 deposits said final order container 220 onto its buffer position 112, after which the transport robot 300 transports the final order container 220 to downstream processes, for example to packaging workstations for packaging.

Optionally, if two material picking systems 1000 are disposed in parallel, an aisle is formed between the racks 110 of the two material picking systems 1000. The retrieving or depositing assembly 120 moves in the aisle and may retrieve or deposit inventory containers 210 of the two material picking systems 1000 and an order container 220 on a buffer position 112 of at least one material picking system 1000. This eliminates a need for the transport robot 300 to transport the order container 220 between the two material picking systems 1000, and the retrieving or depositing assembly 120 may directly perform picking. The warehousing system 1000 provided in embodiments of this application uses the material picking system 100 in any one of the foregoing embodiments, so that the warehousing system 1000 not only can implement a fully automated picking operation, but also can reduce operation costs, and improve spatial utilization of the warehousing system 1000.

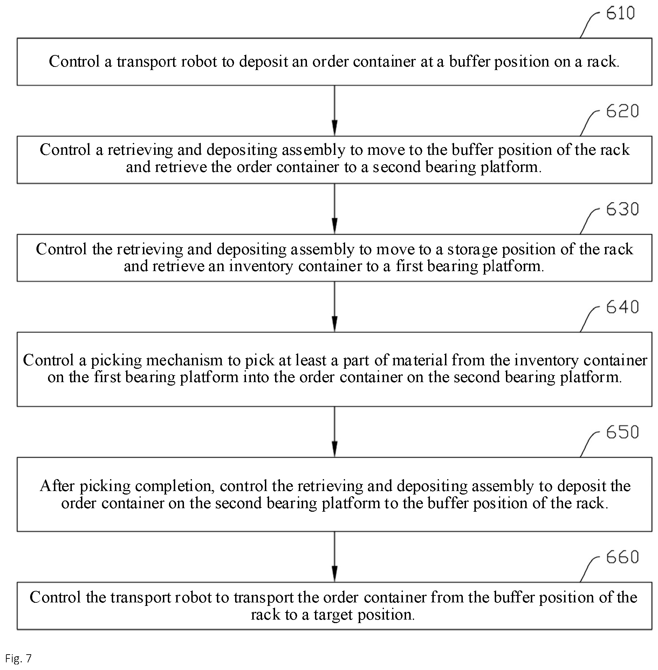

According to another aspect of embodiments of this application, a material picking method is further provided, and is applied to the warehousing system according to any one of the foregoing embodiments. The method may be performed by a controller in the warehousing system. Specifically, FIG. 7 shows a procedure of the material picking method. As shown in the figure, the material picking method includes the following operations:

In block 610: Control the transport robot to deposit the order container at the buffer position on the rack.

In this operation, control over a movement path and an order container deposit action of the transport robot can be implemented through wireless communication between the controller and the transport robot.

In block 620: Control the retrieving or depositing assembly to move to the buffer position of the rack and retrieve the order container to the second bearing platform.

In block 630: Control the retrieving or depositing assembly to move to the storage position of the rack and retrieve the inventory container to the first bearing platform.

Similarly, in both operation 620 and operation 630, control over movement of the retrieving or depositing assembly and its operations of retrieving or depositing the inventory container and the order container can be implemented through wireless or wired communication between the controller and corresponding drive and control modules on the retrieving or depositing assembly.

In addition, it should be noted that, there is no sequence requirement between operation 620 and operation 630. The order container may be first retrieved to the second bearing platform, or the inventory container may be first retrieved to the first bearing platform. In addition, when structural conditions permit (for example, the first bearing platform and the second bearing platforms are disposed as separate structures capable of independent motion), operations of retrieving the order container to the second bearing platform and retrieving the inventory container to the first bearing platform may alternatively be simultaneously performed.

In block 640: Control the picking mechanism to pick at least a part of the material from the inventory container on the first bearing platform into the order container on the second bearing platform.

In block 650: After picking completion, control the retrieving or depositing assembly to deposit the order container on the second bearing platform to the buffer position of the rack.

In block 660: Control the transport robot to transport the order container from the buffer position of the rack to a target position.

Control manners in operation 640 to operation 660 are similar to those in related descriptions of operation 610 to operation 630, and details are not described herein.

By implementing the material picking method provided in this embodiment, a fully automated material picking operation can be implemented, and coordination between a plurality of types of robots is not needed in an entire operation procedure, thereby effectively reducing operational costs.

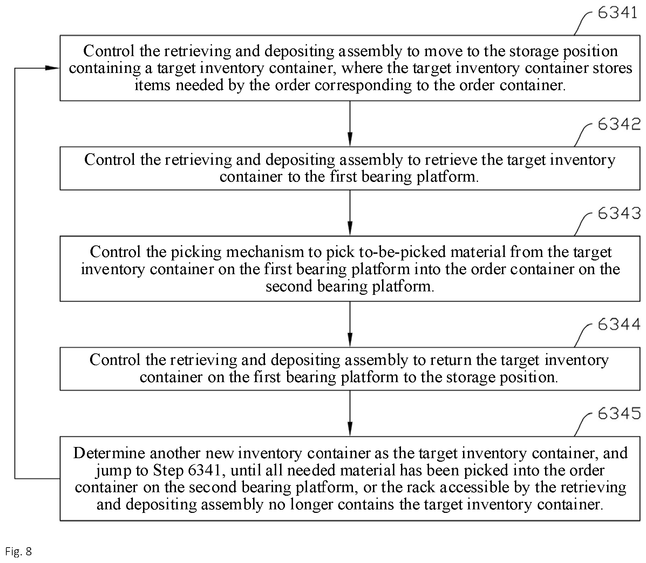

Furthermore, in some embodiments, as shown in FIG. 8, operation 630 and operation 640 include the following operations:
In block 6341: Control the retrieving or depositing assembly to move to the storage position containing a target inventory container, where the target inventory container stores items needed by the order corresponding to the order container.

In block 6342: Control the retrieving or depositing assembly to retrieve the target inventory container to the first bearing platform.

In block 6343: Control the picking mechanism to pick to-be-picked material from the target inventory container on the first bearing platform into the order container on the second bearing platform.

In block 6344: Control the retrieving or depositing assembly to return the target inventory container on the first bearing platform to the storage position.

In block 6345: Determine another new inventory container as the target inventory container, and jump to operation in block 6341, until all needed material has been picked into the order container on the second bearing platform, or the rack accessible by the retrieving or depositing assembly no longer contains the target inventory container.

In this embodiment, for a scenario in which material from different inventory containers on a same rack needs to be picked into a same order container, a manner in which the order container is always placed on the second bearing platform and the different inventory containers are sequentially retrieved to perform corresponding material picking is used, to ensure high efficiency of the material picking operation.

Finally, it should be noted that the foregoing embodiments are merely used for describing the technical solutions of this application, but are not intended to limit this application. Although this application is described in detail with reference to the foregoing embodiments, a person of ordinary skill in the art should understand that, modifications may still be made to the technical solutions that are set forth in the foregoing embodiments, or equivalent replacements may be made to some or all of the technical features. However, these modifications or replacements do not cause the essence of corresponding technical solutions to depart from the scope of the technical solutions in embodiments of this application. In particular, provided that there is no structural conflict, the technical features mentioned in embodiments may be combined in any way.

## Claims

1. A material picking system, comprising a rack and a retrieving or depositing assembly;
wherein the rack has storage positions and buffer positions, at least one of the storage positions is configured to hold an inventory container storing material, and at least one of the buffer positions is configured for a transport robot to deposit or retrieve an order container on the at least one of the buffer positions;
wherein the retrieving or depositing assembly is movably disposed on the rack and has a first bearing platform and a second bearing platform, the retrieving or depositing assembly is capable of moving to the storage position to retrieve the inventory container to the first bearing platform, or deposit the inventory container at the storage position, and the retrieving or depositing assembly is capable of moving to the buffer position to retrieve the order container to the second bearing platform, or deposit the order container at the buffer position; and
wherein a picking mechanism is disposed on the retrieving or depositing assembly, and the picking mechanism is configured to pick at least a part of the material from the inventory container on the first bearing platform into the order container on the second bearing platform according to an order corresponding to the order container.

2. The material picking system according to claim 1, wherein the retrieving or depositing assembly has a first retrieving or depositing mechanism and a second retrieving or depositing mechanism, the first retrieving or depositing mechanism is disposed on the first bearing platform and configured to retrieve or deposit the inventory container at the storage position, and the second retrieving or depositing mechanism is disposed on the second bearing platform and configured to retrieve or deposit the order container at the buffer position.

3. The material picking system according to claim 1, wherein the first bearing platform and the second bearing platform are adjacently disposed along a horizontal direction, and the retrieving or depositing assembly has a third retrieving or depositing mechanism;
the third retrieving or depositing mechanism is disposed on the first bearing platform and configured to retrieve or deposit the inventory container at the storage position, the third retrieving or depositing mechanism is further configured to retrieve the order container from the buffer position to the first bearing platform, and deposit the order container from the first bearing platform to the second bearing platform; and the third retrieving or depositing mechanism is further configured to retrieve the order container from the second bearing platform to the first bearing platform, and deposit the order container on the first bearing platform to the buffer position.

4. The material picking system according to claim 3, wherein the third retrieving or depositing mechanism is configured to: after depositing the order container on the first bearing platform to the second bearing platform, sequentially retrieve inventory containers from the plurality of storage positions according to the order corresponding to the order container, and deposit the retrieved inventory containers to the first bearing platform for the picking mechanism to perform material picking and then return, to complete the order corresponding to the order container.

5. The material picking system according to claim 3, wherein the first bearing platform and the third retrieving or depositing mechanism are disposed to be synchronously rotatable about a vertical axis, wherein the third retrieving or depositing mechanism is configured to synchronously rotate with the first bearing platform to a position facing the second bearing platform, to retrieve or deposit the order container on the second bearing platform.

6. The material picking system according to claim 1, wherein the first bearing platform and the second bearing platform are adjacently disposed along a horizontal direction, and the retrieving or depositing assembly has a fourth retrieving or depositing mechanism;
the fourth retrieving or depositing mechanism is disposed on the second bearing platform and configured to retrieve or deposit the order container at the buffer position, and the third retrieving or depositing mechanism is further configured to retrieve the inventory container from the storage position to the second bearing platform, and deposit the inventory container on the second bearing platform to the first bearing platform; and the fourth retrieving or depositing mechanism is further configured to retrieve the inventory container from the first bearing platform to the second bearing platform, and deposit the inventory container on the second bearing platform to the storage position.

7. The material picking system according to any one of claims 1 to 6, wherein the first bearing platform and the second bearing platform are disposed to perform synchronized vertical lifting, and/or synchronized horizontal movement.

8. The material picking system according to any one of claims 1 to 6, wherein a transverse track and a longitudinal track are disposed on the rack;
wherein the transverse track is fixed to the rack, the longitudinal track is movably connected to the transverse track along the horizontal direction, and the retrieving or depositing assembly is movably connected to the longitudinal track along a vertical direction; or
wherein the longitudinal track is fixed to the rack, the transverse track is movably connected to the longitudinal track along a vertical direction, and the retrieving or depositing assembly is movably connected to the transverse track along the horizontal direction; or
wherein the longitudinal track is movably connected to the rack along a vertical direction, the longitudinal track is movably connected to the rack along the horizontal direction, and the retrieving or depositing assembly is movably connected to the transverse track along the horizontal direction, and movably connected to the longitudinal track along the vertical direction.

9. The material picking system according to any one of claims 1 to 6, wherein multi-layer slots are arranged vertically on the rack, wherein a bottom-layer slot is the buffer position, and at least one remaining layer of slot is the storage position.

10. The material picking system according to claim 9, wherein the rack is configured to be placed on a bearing plane, a bearing carrier is disposed at a bottom end of the rack that is close to the bearing plane, the buffer position is formed on the bearing carrier, and a channel for the transport robot to walk is formed between the bearing carrier and the bearing plane;
wherein the bearing carrier is provided with a goods channel penetrating therethrough along the vertical direction, and the goods channel is provided with an opening along the horizontal direction on a side that faces toward and/or away from the retrieving or depositing assembly;
wherein the opening is configured for a jacking mechanism of the transport robot carrying the order container to enter the goods channel along the horizontal direction, enabling the jacking mechanism of the transport robot to deposit the order container on the bearing carrier after descent; and
wherein the goods channel is configured for the jacking mechanism of the transport robot without load to traverse therethrough along the vertical direction, enabling the jacking mechanism of the transport robot to carry the order container, and wherein the opening is configured for the jacking mechanism of the transport robot carrying the order container to exit through the goods channel along the horizontal direction.

11. The material picking system according to claim 10, wherein the bearing carrier comprises a beam and at least one set of cantilever arms, wherein the beam is horizontally disposed at a bottom side of the rack, each set of cantilever arms comprise at least a first cantilever arm and a second cantilever arm, one end of the first cantilever arm and one end of the second cantilever arm are both fixed to the beam, the first cantilever arm and the second cantilever arm are both perpendicular to the beam, the buffer position is formed on the first cantilever arm and the second cantilever arm jointly, and the first cantilever arm and the second cantilever arm are spaced apart along an extension direction of the beam, to enable the goods channel to be formed between the first cantilever arm and the second cantilever arm.

12. A warehousing system, comprising a transport robot and the material picking system according to any one of claims 1 to 11, wherein the transport robot is configured to deposit or transport the order container at the buffer position of the rack.

13. A material picking method, applied to the warehousing system according to claim 12, wherein the material picking method comprises:
controlling the transport robot to deposit the order container at the buffer position of the rack;
controlling the retrieving or depositing assembly to move to the buffer position of the rack and retrieve the order container to the second bearing platform;
controlling the retrieving or depositing assembly to move to the storage position of the rack and retrieve the inventory container to the first bearing platform;
controlling the picking mechanism to pick at least a part of the material from the inventory container on the first bearing platform into the order container on the second bearing platform;
after picking completion, controlling the retrieving or depositing assembly to deposit the order container on the second bearing platform to the buffer position of the rack; and
controlling the transport robot to transport the order container from the buffer position of the rack to a target position.

14. The material picking method according to claim 13, wherein the controlling the retrieving or depositing assembly to move to the storage position of the rack and retrieve the inventory container to the first bearing platform and the controlling the picking mechanism to pick at least a part of the material from the inventory container on the first bearing platform into the order container on the second bearing platform comprise:
controlling the retrieving or depositing assembly to move to the storage position containing a target inventory container, wherein the target inventory container stores items needed by the order corresponding to the order container;
controlling the retrieving or depositing assembly to retrieve the target inventory container to the first bearing platform;
controlling the picking mechanism to pick to-be-picked material from the target inventory container on the first bearing platform into the order container on the second bearing platform;
controlling the retrieving or depositing assembly to return the target inventory container on the first bearing platform to the storage position; and
determining another new inventory container as the target inventory container, and jumping to the step of controlling the retrieving or depositing assembly to move to the storage position containing a target inventory container, until all needed material has been picked into the order container on the second bearing platform, or the rack accessible by the retrieving or depositing assembly no longer contains the target inventory container.
